**Europäisches Patentamt**

**European Patent Office**

**Office européen des brevets**

(19)

(11) Veröffentlichungsnummer: **0 254 933**
**B1**

# (12) EUROPÄISCHE PATENTSCHRIFT

(45) Veröffentlichungstag der Patentschrift:
24.01.90

(51) Int. Cl.⁴: **F16B 13/12**

(21) Anmeldenummer: **87109972.7**

(22) Anmeldetag: **10.07.87**

(54) Spreizdübel, insbesondere zur Befestigung von Leicht-Isolations-Platten an Mauern.

(30) Priorität: **31.07.86 DE 3625984**

(43) Veröffentlichungstag der Anmeldung:
03.02.88 Patentblatt 88/5

(45) Bekanntmachung des Hinweises auf die Patenterteilung:
24.01.90 Patentblatt 90/4

(84) Benannte Vertragsstaaten:
AT BE CH DE ES FR GB IT LI NL

(56) Entgegenhaltungen:
EP-A- 0 042 573
EP-A- 0 146 453
AT-B- 235 632
DE-A- 2 418 205
DE-C- 2 542 074
DE-U- 7 125 106
FR-A- 2 161 175
FR-A- 2 415 225

(73) Patentinhaber: "TOGE-DÜBEL" A. Gerhard GmbH,
Illesheimer Strasse 10, D-8500 Nürnberg 80(DE)

(72) Erfinder: Gerhard, Anton, Illesheinmer Strasse 10,
D-8500 Nürnberg 80(DE)

(74) Vertreter: Rau, Manfred, Dr. Dipl.-Ing. et al, Rau &
Schneck, Patentanwälte Königstrasse 2,
D-8500 Nürnberg 1(DE)

## Beschreibung

Die Erfindung betrifft einen Spreizdübel nach dem Oberbegriff des Anspruches 1.

Derartige aus der EP-A2 0 042 573 bekannte Spreizdübel weisen eine einstückig mit dem Halteteller ausgebildete Hülse auf, die im Bereich ihres in das Bohrloch einzuführenden, dem Halteteller abgewandten Endes längs geteilt ist. In diesem Bereich ist der Innenquerschnitt der Hülse reduziert, so daß sie beim Eintreiben eines aus Metall oder Kunststoff bestehenden zylindrischen Spreizstiftes gespreizt und im Bohrloch verankert wird. Mittels derartiger Dübel werden aus Schaum-Kunststoff oder Mineralfasern bestehende Isolations-Platten an Mauern angeheftet und zueinander auf dem in der Regel unebenen Mauer-Untergrund ausgerichtet.

Beim Eintreiben der Spreizstifte in die Hülse werden so große axiale Kräfte auf die Hülse ausgeübt, bevor diese durch entsprechendes Verspreizen im Bohrloch axial festgelegt ist, daß die Isolations-Platten vom Halteteller verdrückt und außerdem die Platten selber in ihrer Lage zueinander verändert werden. Darüber hinaus ist die Herstellung der einstückig ausgebildeten Dübel verhältnismäßig aufwendig, da komplizierte Spritzwerkzeuge mit Kernen verwendet werden müssen, so daß die Taktzeiten verhältnismäßig groß sind.

Weiterhin ist es bekannt, derartige Leicht-Isolations-Platten mittels Befestigungsstiften in Bohrlöchern der darunter liegenden Wand zu befestigen. Diese Befestigungsstifte bestehen aus sich zum Bohrloch hin verjüngenden Rippen und weisen im Bohrloch-Bereich radial vorstehende, dünne Stege auf, die sich im Bohrloch verankern. Ein vorheriges, kräftefreies Ausrichten der Platten ist hierbei nicht möglich. An diesem Stift können Halteteller unterschiedlicher Größe als gesondertes Bauteil befestigt werden.

Aus der DE-C 2 542 074 ist ein Spreizdübel bekannt, der aus zwei Halbschalen besteht, die in einer Mittel-Trennebene aneinanderliegen, und die im Bereich des äußeren Endes mittels eines Rings zusammengehalten werden. Diese sich kegelförmig verjüngenden Halbschalen weisen als Ringstege ausgebildete Vorsprünge auf, die alle auf einer zylindrischen Fläche liegen. Das Spreizen erfolgt mittels einer in die Hülse einschraubbaren Spreizschraube. Dieser Dübel ist besonders zum Einsatz in Weichstein geeignet.

Der Erfindung liegt die Aufgabe zugrunde, einen Spreizdübel der gattungsgemäßen Art so weiterzubilden, daß er zum Befestigen von weichen Leicht-Isolations-Platten geeignet ist, ohne daß diese beim Eintreiben des Spreizstiftes zusammengepreßt oder in ihrer Lage zueinander verändert werden.

Diese Aufgabe wird erfindungsgemäß durch die Merkmale im Kennzeichnungsteil des Anspruches 1 gelöst. Der Kern der Erfindung liegt darin, daß ein Außen-Spreizbereich vorgesehen ist, in dem die Hülse in ihrem Bereich außerhalb des Bohrloches gespreizt wird. Gleich zu Beginn des Einführens des Spreizstiftes wird also dieser außerhalb des Bohrloches liegende Bereich gespreizt. Dies geschieht, bevor zwischen Spreizstift und Hülse nennenswerte, auf die Hülse übertragene Reibungskräfte auftreten. Die Hülse wird also vor dem Bohrloch-Rand bereits gespreizt und dadurch axial zum Bohrloch festgelegt, bevor sie durch radiales Spreizen in diesem verankert wird. Die eingangs geschilderten Nachteile der bekannten Spreizdübel sind also behoben.

Wie aus Anspruch 2 hervorgeht, führen die erfindungsgemäßen Maßnahmen auch zu herstellungstechnischen Vorteilen, da sich Halbschalen sehr viel leichter aus Kunststoff spritzen lassen als eine einstückige Hülse. Anspruch 3 gibt eine optimale Dimensionierung für eine besonders ausgeprägte Spreizung im Außen-Spreizbereich an. In der Ausgestaltung nach Anspruch 4 wird in besonders günstiger Weise sichergestellt, daß die Hülse sich sofort zu Beginn des Spreizens des Außen-Spreizbereiches am Bohrlochrand axial verklammert.

Die Ausgestaltung nach Anspruch 5 bewirkt, daß das Einführen des Spreizstiftes bis zum Außen-Spreizbereich besonders reibungsarm vonstatten geht, daß also hier keine nennenswerten Axialkräfte durch Reibung auf die Hülse übertragen werden. Dies wird durch die Maßnahmen nach Anspruch 6 besonders unterstützt.

Die Ausgestaltung nach Anspruch 7 führt dazu, daß der Halteteller gleichzeitig eine Montagehilfe zum Zusammenbau der beiden Halbschalen ist. Dieser Aufbau bewirkt gleichzeitig, daß bei ansonsten unverändertem Spreizdübel Halteteller unterschiedlicher Größe montiert werden können.

Durch die Weiterbildung nach Anspruch 8 wird sichergestellt, daß die beiden Halbschalen vor der Montage eine genau definierte Lage zueinander haben. Durch die Ausgestaltung nach Anspruch 9 wird sichergestellt, daß zum einen die beiden Halbschalen im Bereich ihres inneren, zuerst in das Bohrloch einzuführenden Endes fest miteinander verbunden sind, und daß sie andererseits einstückig hergestellt werden können, und zwar in einer kernlosen und damit besonders einfachen Spritzform.

Weitere Vorteile und Merkmale der Erfindung ergeben sich aus der nachfolgenden Beschreibung eines Ausführungsbeispiels anhand der Zeichnung. Es zeigt

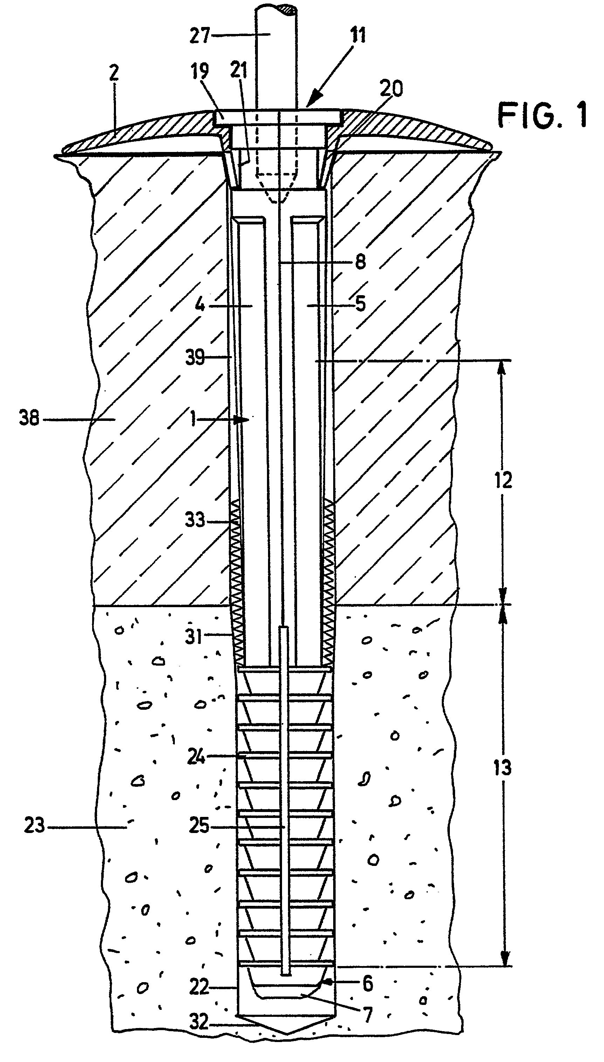

Fig. 1 einen Spreizdübel nach der Erfindung in montiertem, aber ungespreiztem Zustand,

Fig. 2 eine Halbschale der Hülse des Spreizdübels in Draufsicht mit einem Teil eines Spreizstiftes.

Der in der Zeichnung dargestellte Spreizdübel besteht im wesentlichen aus einer Hülse 1 und einem Halteteller 2. Die Hülse 1 ist in ihrer mit ihrer Mittel-Längs-Achse 3 zusammenfallenden Mittelebene geteilt, besteht also aus zwei Halbschalen 4, 5. Diese sind an ihrem inneren Ende 6 mittels eines Filmscharniers 7 einstückig miteinander verbunden, so daß sie flach, also in Längsrichtung aufgeklappt, einstückig aus einem geeigneten, in der Regel thermoplastischen Kunststoff gespritzt und anschließend zur Hülse 1 aneinandergeklappt werden können, wobei sie dann in der Trennebene 8 aneinanderliegen. In den in der Trennebene 8 liegenden Flächen sind die Halbschalen 4, 5 mit Zentrierzapfen 9 und entsprechend zugeordneten Zentrier-Sacklöchern 1o im Bereich des äußeren Endes 11 der Hülse 1 versehen. Im noch zu erläutenden, etwa in der Längsmitte befindlichen Außen-Spreizbereich 12 und im ebenfalls noch zu erläuternden, dem inneren Ende 6 zugeordneten Bohrloch-Spreizbereich 13 sind die Halbschalen 4, 5 mit etwa parallel zur Achse 3 verlaufenden Führungsstegen 14, 15 versehen, die in entsprechende Führungs-Ausnehmungen 16, 17 eingreifen, wenn die beiden Halbschalen 4, 5 in ihrer Trennebene 8 aneinanderliegen, wodurch radiale Verschiebungen der beiden Halbschalen 4, 5 gegeneinander verhindert werden, solange diese Halbschalen 4, 5 nicht so weit senkrecht zur Trennebene 8 voneinander entfernt werden, daß die Führungsstege 14, 15 außer Eingriff mit den Führungsausnehmungen 16, 17 kommen.

Nach dem Zusammenklappen der beiden Halbschalen 4, 5 zur Hülse 1 wird vom inneren Ende 6 her ein Halteteller 2 über die Hülse 1 bis zu deren äußeren Ende geschoben. Dort kommt der Halteteller 2 gegen einen radial vorstehenden Ringbund 19 zur Anlage, so daß er nicht vom äußeren Ende 11 der Hülse 1 heruntergeschoben werden kann. Er rastet mittels federnder Verriegelungsstege 2o in einer Ringnut 21 unmittelbar vor dem Ringbund 19 ein, wodurch zum einen der Halteteller 2 axial festgelegt ist und zum anderen die beiden Halbschalen 4, 5 im Bereich des äußeren Endes 11 für den praktischen Betrieb unlösbar miteinander verbunden werden, d.h. die beiden Halbschalen 4, 5 können nicht mehr senkrecht zur Trennebene 8 voneinander geklappt werden. Die Zentrierzapfen 9 mit den Zentrier-Sacklöchern 1o sind insoweit nur eine Montage-Zentrier-Hilfe.

Im Bohrloch-Spreizbereich 13, d.h. in dem Bereich, der in einem Bohrloch 22 einer Mauer 23 anzuordnen ist, weist die Hülse 1 ringförmige Vorsprünge 24 auf. Beim Spreizen der Hülse 1 im Bohrloch-Spreizbereich 13 drücken sich diese ringförmigen Vorsprünge 24 in die Mauer 23, wodurch die Hülse 1 axial im Bohrloch 22 festgelegt wird.

Um ein einfaches Einführen der Hülse 1 in das Bohrloch 22 zu ermöglichen, auch wenn letzteres verhältnismäßig knapp gebohrt sein sollte, ist die Hülse 1 in ihrer Trennebene 8 mit einem Längsschlitz 25 versehen, so daß sie beim Einschieben in das Bohrloch 22 senkrecht zur Trennebene 8 leicht zusammengedrückt werden kann.

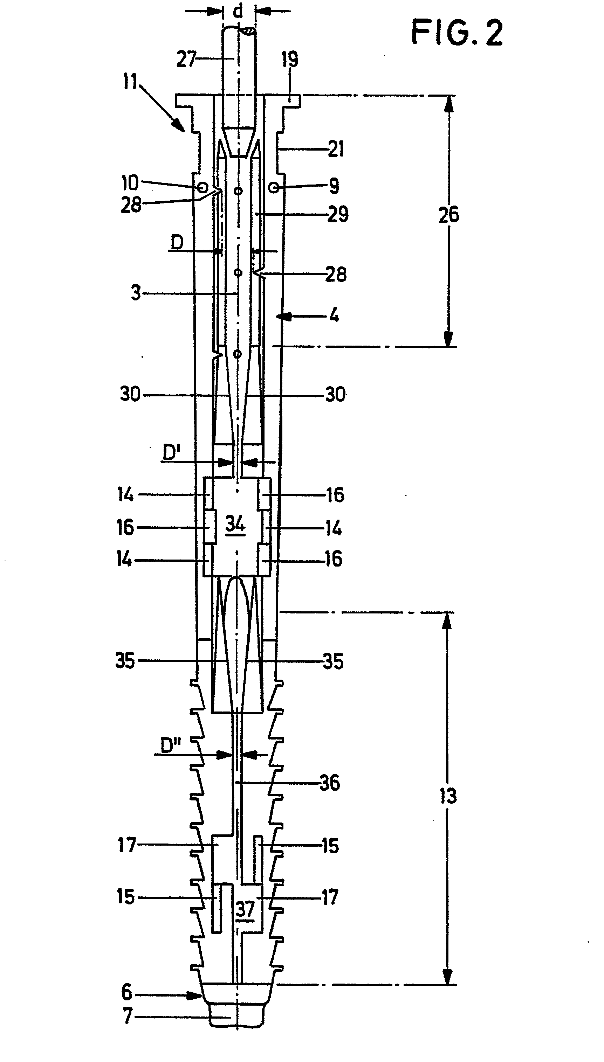

Wie insbesondere aus Fig. 2 hervorgeht, weist die Hülse 1 in dem am äußeren Ende 11 beginnenden Bereich einen Einführ-Abschnitt 26 zum möglichst reibungsarmen Einführen eines Spreizstiftes 27 auf. In diesem Einführ-Abschnitt sind Spitzen 28 vorgesehen, mittels derer der Spreizstift 27 konzentrisch zur Achse 3 eingeführt werden kann, ohne flächig an der Innenwand der Hülse 1 anzuliegen. Parallel zur Achse 3 und in Umfangsrichtung zwischen den Spitzen sind Rippen 29 an den Halbschalen 4, 5 ausgebildet, die am Ende des Einführ-Abschnitts 26, der gleichzeitig Beginn des Außen-Spreizbereichs 12 ist, zur Achse 3 hin ansteigen, so daß innere Spreizflächen 3o gebildet werden, d.h. der freie Innen-Querschnitt der Hülse 1 nimmt ab. Während der Innen-Durchmesser D der Hülse 1 im Bereich der Spitzen 28 etwa gleich dem Außen-Durchmesser d des zylindrischen Spreizstiftes 27 ist, gilt für den Innen-Durchmesser D' am engsten Bereich der inneren Spreizflächen 3o $0{,}3\,d \leq D' \leq 0{,}5\,d$. Beim Eintreiben des Spreizstiftes 27 über die inneren Spreizflächen 3o wird somit der zugehörige, und zwar insbesondere der nachfolgende, vor der Mauer 23 befindliche Außen-Spreizbereich 12 der Hülse, durch Aufweiten der beiden Halbschalen 4, 5 senkrecht zur Trennebene 8 gespreizt. Die tangentiale Erstreckung der Führungsstege 14, 15 ist so groß, daß sie nicht außer Eingriff mit den Führungsausnehmungen 16, 17 kommen. Beim Eintreiben des Spreizstiftes 27 in die Hülse 1 wird diese also in einem Außen-Spreizbereich 12 gespreizt, der sich außerhalb der Mauer 23, also vor dem Bohrloch 22 befindet. Die über ihren ganzen Außen-Querschnitt außerhalb des Borhlochs 22 gespreizte Hülse 1 stützt sich also am Bohrlochrand 31 ab und wird nicht weiter in das Bohrloch 22 eingeschoben oder eingetrieben, obwohl durch die Reibung zwischen Spreizstift 27 und Hülse 1 unvermeidbar beim Eintreiben des Spreizstiftes 27 in die Hülse 1 auf letztere auch in Richtung zum Bohrlochgrund 32 wirkende Kräfte angreifen. Diese Abstützung am Bohrlochrand 31 wird noch unterstützt durch diametral zueinander auf jeder Halbschale 5 angebrachte Vorsprünge nach Art einer Zahnreihe 33, die im Bereich des Bohrlochrandes 31 in das Bohrloch 22 eingeschoben sein können und sich hier besonders intensiv beim Spreizen des Außen-Spreizbereiches 12 verklammern.

Beim weiteren Eintreiben des Spreizstiftes 27 durchläuft der Spreizstift 27 einen Abschnitt 34, in dem sich die Führungsstege 14 und die zugeordneten Führungsausnehmungen 16 befinden, und in dem der Spreizstift 27 rundum frei von der Hülse 1 ist. An diesen Abschnitt 34 schließt sich der Bohrloch-Spreizbereich 13 an, in dem zu Beginn zur Achse 3 hin ansteigende Spreizflächen 35 ausgebildet sind. Hieran schließt sich ein Spreizkanal 36 an, dessen Durchmesser D" etwa gleich dem Durchmesser D' ist. Am Ende dieses Spreizkanals 36 befindet sich erneut ein Abschnitt 37, in dem sich die Führungsstege 15 und die Führungsausnehmungen 17 befinden, und in dem der Spreizstift 27 weitgehend frei von der Hülse 1 ist. In diesem Bohrloch-Spreizbereich 13 wird also die Hülse 1 besonders intensiv gespreizt, so daß sich ihre ringförmen Vorsprünge 24 besonders fest in der Mauer 23 verklammern.

Die Vor-Spreizung der Hülse 1 gleich zu Beginn des Eintreibens des Spreizstiftes 27 und die dadurch bewirkte axiale Fixierung der Hülse 1 relativ zur Mauer 23 machen den Dübel besonders geeignet zur Befestigung von Leicht-Isolations-Platten 38 an der Mauer 23. Derartige Leicht-Isolations-Platten aus geschäumtem Kunststoff, beispielsweise geschäumtem Polystyrol oder geschäumtem Polyurethan, oder aus Mineralfasern, sind sehr druckempfindlich. Aufgrund der geschilderten Ausgestaltung können sie an die Mauer 23 angelegt werden. Dann wird ein Loch 39 durch die Platte 38 und sofort im Anschluß das Bohrloch 22 in die Mauer 23 gebohrt. Dann wird der Dübel durch das Loch 39 in das Bohrloch 22 geschoben, bis der Halteteller 2 gegen die Außenseite der Platte 38 anliegt. Da die Mauer 23 in der Regel keine ebene Oberfläche hat, können mittels der Dübel benachbarte Platten 38 fluchtend zueinander ausgerichtet werden. Wenn dann der Spreizstift 27 in die Hülse 1 eingetrieben wird, verändert diese ihre axiale Lage nicht, d.h. die Platte 38 wird durch den Halteteller 2 nicht zusammengepreßt; außerdem verändern benachbarte Platten 38 ihre Lage zueinander nicht.

Die Platten 38 können eine unterschiedliche Dicke haben. Innerhalb eines vorgegebenen Bereiches kann hierfür ein Spreizdübel vorgegebener Länge verwendet werden. Entscheidend ist nur, daß die Hülse mit einer gewissen Mindest-Tiefe, die dem Bereich mit den ringförmigen Vorsprüngen 24 entspricht, im Bohrloch 22 angeordnet ist. Ansonsten erfolgt die Vorspreizung zuverlässig, und zwar unabhängig davon, wie weit die inneren Spreizflächen 3o vom Bohrlochrand 31 entfernt sind, da die beiden Halbschalen 4, 5 über den gesamten Bereich senkrecht zur Trennebene voneinander abgehoben werden, indem dies möglich ist. Möglich ist dies aber über den gesamten, außerhalb des Bohrloches 22 befindlichen Bereich, da die Platte 38 aufgrund ihrer Struktur hier keinen Widerstand bietet.

## Patentansprüche

1. Spreizdübel zur Befestigung von Leicht-Isolations-Platten (38) an Mauern (23), bestehend aus einer Hülse (1), an deren einem Ende (11) ein Halteteller (2) angebracht ist und im Bereich von deren anderem Ende ein Bohrloch-Spreizbereich (13) ausgebildet ist, in dem die Hülse (1) längsgeteilt ist, und aus einem in die Hülse (1) von deren mit dem Halteteller (2) versehenen Ende (11) her einführbaren Spreizstift (27), dessen Durchmesser (d) größer ist als der Innendurchmesser (D″) der Hülse (1) im Bohrloch-Spreizbereich (13) in ungespreiztem Zustand, dadurch gekennzeichnet, daß die Hülse (1) zwischen dem Bohrloch-Spreizbereich (13) und dem Halteteller (2) einen vom Bohrloch-Spreizbereich (13) gesonderten Außen-Spreizbereich (12) aufweist, in dem die Hülse (1) längs geteilt und mit inneren Spreizflächen (30) versehen ist, mittels derer die Hülse (1) beim Einführen des Spreizstiftes (27) vor dem Spreizen des Bohrloch-Spreizbereichs (13) gespreizt wird.

2. Spreizdübel nach Anspruch 1, dadurch gekennzeichnet, daß die Hülse (1) aus zwei Halbschalen (2, 3) besteht.

3. Spreizdübel nach Anspruch 1, dadurch gekennzeichnet, daß für das Verhältnis von Durchmesser (d) des Spreizstiftes (27) und Innen-Durchmesser (D′) der inneren Spreizflächen (30) im Außen-Spreizbereich (12) gilt: 0,3 d ≤ D′ ≤ 0,5 d.

4. Spreizdübel nach Anspruch 1, dadurch gekennzeichnet, daß die Hülse (1) – vom äußeren Ende (11) her gesehen – am Ende des Außen-Spreizbereiches (12) mit Vorsprüngen (Zahnreihe 33) zum Verklammern der Hülse (1) im Bereich des Bohrlochrandes (31) versehen ist.

5. Spreizdübel nach Anspruch 1, dadurch gekennzeichnet, daß zwischen dem äußeren Ende (11) und dem Außen-Spreizbereich (12) ein Einführ-Abschnitt (26) in der Hülse (1) ausgebildet ist, in dem der Spreizstift (27) nicht vollflächig an der Hülse (1) anliegt.

6. Spreizdübel nach Anspruch 5, dadurch gekennzeichnet, daß in dem Einführabschnitt (26) Spitzen (28) und/oder Rippen (29) als Führung für den Spreizstift (27) vorgesehen sind.

7. Spreizdübel nach Anspruch 2, dadurch gekennzeichnet, daß der Halteteller (2) am äußeren Ende (11) der Hülse (1) mit den beiden Halbschalen (4, 5) axial verriegelt ist.

8. Spreizdübel nach Anspruch 2, dadurch gekennzeichnet, daß die Halbschalen (4, 5) durch Zapfen (9) und/oder Stege (14, 15), die in entsprechende Löcher (10) bzw. Ausnehmungen (16, 17) in der jeweils anderen Halbschale (5, 4) eingreifen, in ihrer Trennebene (8) zueinander festgelegt sind.

9. Spreizdübel nach Anspruch 2, dadurch gekennzeichnet, daß die beiden Halbschalen (4, 5) an ihrem dem Halteteller (2) entgegengesetzten inneren Ende (6) mittels eines Filmscharniers (7) einstückig miteinander verbunden sind.

## Claims

1. A straddling dowel for the fixing of light insulation plates (38) on walls (23) consisting in a bushing (1) at one end of which (11) a holding plate (2) is mounted, and in the region of the other end of which a bore hole expansion region (13) is formed in which the bushing (1) is longitudinally divided, and in an expanding pin (27) which can be introduced into the bushing from its end (11) provided with the holding plate (2), the diameter (d) of said expanding pin (27) being greater than the inner diameter (D″) of the bushing (1) in the bore hole expansion region (13) in the non-expanded state, characterized in that the bushing (1) between the bore hole expansion region (13) and the holding plate (2) has an external expansion region (12) separate from the bore hole expansion region (13) in which the bushing (1) is divided longitudinally and is provided with inner expansion surfaces (30) by means of which the bushing (1) on the introduction of the expanding pin (27) is expanded before the expansion of the bore hole expansion region (13).

2. A straddling dowel according to claim 1, characterized in that the bushing (1) is made up of two half cups (2, 3).

3. A straddling dowel according to claim 1, characterized in that the ratio of the diameter (d) of the expansion pin (27) to the inner diameter (D′) of the inner expanding surfaces (30) in the outer expanding region (12) is 0.3 d ≤ D′ ≤ 0.5 d.

4. A straddling dowel according to claim 1, characterized in that the bushing (1) – seen from the outer end (11) – is provided at the end of the outer expanding region (12) with projections (row of teeth 33) for clamping the bushing (1) in the region of the edge of the bore hole (31).

5. A straddling dowel according to claim 1, characterized in that between the outer end (11) and the outer expansion region (12) an insertion portion (26) is formed in the bushing, in which insertion portion the expanding pin (27) does not apply with the whole surface on the bushing (1).

6. A straddling dowel according to claim 5, characterized in that points (28) and/or ribs (29) are provided in the insertion portion (26) as guides for the expanding pin (27).

7. A straddling dowel according to claim 2, characterized in that the holding plate (2) is axially bolted at the outer end (11) of the bushing (1) with the two half cups (4, 5).

8. A straddling dowel according to claim 2, characterized in that the half cups (4, 5) are fixed to each other in their separation plane (8) by means of pins (9) and/or webs (14, 15) which engage into corresponding holes (10) or recesses in the respective other half cup (5, 4).

9. A straddling dowel according to claim 2, characterized in that the two half cups are integrally joined together at their inner end (6) opposite the holding plate (2) by means of a film hinge (7).

**Revendications**

1. Cheville à expansion pour la fixation de panneaux isolants légers (38) sur des murs (23), comportant une douille (1) à une extrémité de laquelle (11) est disposée une collerette de maintien (2) et dans la zone de l'autre extrémité de laquelle est conformée une zone d'expansion du trou foré (13), dans laquelle la douille est divisée longitudinalement, et comportant également une tige d'expansion (27) pouvant être introduite dans la douille (1) par l'extrémité de celle-ci (11) pourvue de la collerette de maintien (2), tige d'expansion (27) dont le diamètre (d) est supérieur au diamètre intérieur (D") de la douille (1) dans la zone d'expansion du trou foré (13) à l'état non élargie, cheville à expansion caractérisée en ce que la douille (1) présente entre la zone d'expansion du trou foré (13) et la collerette de maintien (2) une zone d'expansion externe (12) séparée de la zone d'expansion du trou foré (13), zone d'expansion externe (12) dans laquelle la douille (1) est divisée longitudinalement et est pourvue de surfaces d'expansion (30), au moyen desquelles la douille (1) est élargie lors de l'introduction de la tige d'expansion (27) avant l'expansion de la zone d'expansion du trou foré (13).

2. Cheville à expansion selon la revendication 1, caractérisée en ce que la douille (1) est constituée de deux demi-coquilles (2, 3).

3. Cheville à expansion selon la revendication 1, caractérisée en ce que le rapport entre le diamètre (d) de la tige d'expansion (27) et le diamètre intérieur (D') des surfaces d'expansion intérieures (30) dans la zone d'expansion externe (12) est de : $0,3 \, d \leq D' \leq 0,5 \, d$.

4. Cheville à expansion selon la revendication 1, caractérisée en ce que la douille (1) (vue à partir de l'extrémité la plus extérieure (11)) est pourve à l'extrémité de la zone d'expansion externe (12) de parties en saillie (série de dents (33)) pour l'ancrage de la douille (1) dans la zone du bord du trou foré (31).

5. Cheville à expansion selon la revendication 1, caractérisée en ce qu'entre l'extrémité la plus extérieure (11) et la zone d'expansion externe (12) est formé dans la douille (1) un tronçon d'introduction (26), dans lequel la tige d'expansion (27) n'est pas en contact surfacique total avec la douille (1).

6. Cheville à expansion selon la revendication 5, caractérisée en ce que dans le tronçon d'introduction (26) sont prévues des pointes (28) et/ou des nervures (29) pour le guidage de la tige d'expansion (27).

7. Cheville à expansion selon la revendication 2, caractérisée en ce que la collerette de maintien (2) est bloquée axialement sur l'extrémité la plus extérieure (11) de la douille (1) avec les deux demi-coquilles (4, 5).

8. Cheville à expansion selon la revendication 2, caractérisée en ce que les demicoquilles (4, 5) sont fixées l'une à l'autre dans leur plan de séparation (8) par des tenons (9) et/ou des barrettes (14, 15) qui sont en prise dans des trous (10) et/ou des cavités (16, 17) correspondantes dans l'autre demi-coquille respective (5, 4).

9. Cheville à expansion selon la revendication 2, caractérisée en ce que les deux demicoquilles (4, 5) sont reliées l'une à l'autre en une seule pièce à leur extrémité (6) intérieure opposée à la collerette de maintien (2) au moyen d'une charnière pelliculaire (7).

EP 0 254 933 B1

FIG. 1

EP 0 254 933 B1

FIG. 2